(19) Europäisches Patentamt / European Patent Office / Office européen des brevets

(11) **EP 3 202 832 B1**

(12) **EUROPEAN PATENT SPECIFICATION**

(45) Date of publication and mention of the grant of the patent:
**04.11.2020 Bulletin 2020/45**

(21) Application number: **15848073.1**

(22) Date of filing: **29.09.2015**

(51) Int Cl.:
*C08J 9/06* (2006.01)     *C08L 21/00* (2006.01)
*C08L 23/04* (2006.01)     *C08L 23/16* (2006.01)
*C08L 23/12* (2006.01)

(86) International application number:
**PCT/JP2015/077598**

(87) International publication number:
**WO 2016/052555 (07.04.2016 Gazette 2016/14)**

(54) **CROSSLINKED POLYOLEFIN FOAM**

VERNETZTER POLYOLEFINSCHAUMSTOFF

MOUSSE DE POLYOLÉFINE RÉTICULÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2014 JP 2014201668**

(43) Date of publication of application:
**09.08.2017 Bulletin 2017/32**

(73) Proprietor: **Sekisui Chemical Co., Ltd.
Osaka-shi, Osaka 530-8565 (JP)**

(72) Inventors:
• **UNO, Takumei
Hasuda-shi
Saitama 349-0198 (JP)**
• **MIKAMI, Hiroki
Hasuda-shi
Saitama 349-0198 (JP)**

(74) Representative: **Ter Meer Steinmeister & Partner
Patentanwälte mbB
Nymphenburger Straße 4
80335 München (DE)**

(56) References cited:
**EP-A2- 0 438 874       JP-A- 2003 026 844
JP-A- 2004 204 154       JP-A- 2005 239 995
JP-A- 2005 350 571       JP-A- 2008 266 589**

• **DATABASE WPI Week 200453 Thomson
Scientific, London, GB; AN 2004-547727
XP002780444, & JP 2004 204154 A (SEKISUI
CHEM IND CO LTD) 22 July 2004 (2004-07-22)**
• **DATABASE WPI Week 199428 Thomson
Scientific, London, GB; AN 1994-230710
XP002780445, & JP H06 166767 A (SEKISUI CHEM
IND CO LTD) 14 June 1994 (1994-06-14)**

**EP 3 202 832 B1**

**Description**

Technical Field

The present invention relates to a crosslinked polyolefin foam as defined in the claims.

Background Art

Crosslinked polyolefin foams are widely used as thermal insulators, cushions, etc. In an automobile field, in particular, the foams are used as vehicle interior materials such as a ceiling material, a door, and an instrument panel. These vehicle interior materials are typically made by subjecting a crosslinked polyolefin foam having a sheet form to secondary forming such as vacuum molding and compression molding to thereby form the foam into a predetermined shape. Furthermore, in some cases, the crosslinked polyolefin foam is subjected to secondary forming after a sheet of resin or elastomer such as polyvinylchloride resin and thermoplastic elastomer, or a sheet material such as natural or artificial fabric material is stacked thereon.
Various resin materials for crosslinked polyolefin foams used as the vehicle interior material are known; for example, polypropylene and a mixture of polypropylene and polyethylene are widely used. Foams made from these resin materials only have low flexibility, and therefore, it is also known that a thermoplastic elastomer is further blended in addition to polypropylene and polyethylene as the resin material (for example, refer to PTL1).
PTL2 discloses a thermoplastic resin foam sheet comprising ethylene-propylene diene copolymer and polyolefin. PTL3 discloses a flexible cross-linked polyolefin foam that is a cross-linked foam of a polyolefin resin composition.

Citation List

Patent Literature

PTL1: JP 2008-266589 A
PTL2: JP 2005 350571 A
PTL3: JP 2004 204154 A

Summary of Invention

Technical Problem

As described in PTL1, the blending of a thermoplastic elastomer in the resin material enhances the flexibility of a foam but worsens the formability in secondary forming of the foam. Accordingly, in order to improve the formability, attempts have been made to increase the crosslinking degree of the entire foam and to use a high-melting point resin as the polypropylene or the like.
However, the improvement of formability by the adjustment of the crosslinking degree of the entire foam or by use of a high-melting point resin impairs the flexibility of the foam. As a result, the molded product becomes rough to the touch, which means the effect of the addition of a thermoplastic elastomer is eliminated.
It is an object of the present invention, in view of these circumstances, to provide a crosslinked polyolefin foam capable of having enhanced workability without impairment of flexibility.

Solution to Problem

Through extensive investigation, the present inventors have found that a foam can exhibit enhanced formability while maintaining favorable flexibility, by using a rubber component such as an olefin rubber having a Mooney viscosity in a specified range in addition to a polyolefin resin such as polypropylene, and by providing a higher crosslinking degree in the surface layer of the foam than in the internal part of the foam, thus accomplishing the present invention as defined in the claims. In addition, the present disclosure provides the following (1) to (10).

(1) A crosslinked polyolefin foam that is a crosslinked foam of a polyolefin resin composition, the composition comprising: a polyolefin resin (A); and a rubber (B) having a Mooney viscosity ($ML_{1+4}$, 100°C) of 15 to 85, the rubber (B) being contained in an amount of 10 to 150 parts by mass relative to 100 parts by mass of the polyolefin resin (A),

2

the foam having a thickness of 1.5 mm or more, a 25% compressive hardness of 60 kPa or less, and a crosslinking degree of at least one of surface layers at both surfaces with a depth of 500 μm from the surface that is at least 5% higher than a crosslinking degree of a middle layer excluding the surface layers at both surfaces.

(2) The crosslinked polyolefin foam according to item (1), wherein the rubber (B) is at least one selected from the group consisting of a styrene rubber and an olefin rubber.

(3) The crosslinked polyolefin foam according to item (2), wherein the rubber (B) is an olefin rubber.

(4) The crosslinked polyolefin foam according to any one of items (1) to (3), wherein the crosslinking degree of the whole is 30 to 55%.

(5) The crosslinked polyolefin foam according to any one of items (1) to (4), wherein the polyolefin resin (A) comprises a polypropylene resin.

(6) The crosslinked polyolefin foam according to item (5), wherein the polyolefin resin (A) further comprises 1 to 100 parts by mass of a polyethylene resin relative to 100 parts by mass of the polypropylene resin.

(7) The crosslinked polyolefin foam according to item (6), wherein the polyethylene resin is a linear low-density polyethylene resin.

(8) The crosslinked polyolefin foam according to item (5), wherein the polypropylene resin is an ethylene-propylene random copolymer.

(9) The crosslinked polyolefin foam according to any one of items (1) to (8), wherein the crosslinking degree of each of the surface layers at both surfaces is at least 5% higher than the crosslinking degree of the middle layer.

(10) A molded product obtained by molding the crosslinked polyolefin foam according to any one of items (1) to (9).

Advantageous Effects of Invention

According to the present invention, a crosslinked polyolefin foam having improved formability while maintaining favorable flexibility can be provided.

Description of Embodiments

The present invention will be further described in detail with reference to embodiments below.

The crosslinked polyolefin foam of the present invention is a foam made by crosslinking and foaming a polyolefin resin composition (hereinafter also referred to simply as "resin composition") comprising a polyolefin resin (A) and a rubber (B) having a specified Mooney viscosity as defined in the claims. Each of the components for use in the resin composition will be described below.

<Polyolefin resin (A)>

Examples of the polyolefin resin (A) include a polypropylene resin, a polyethylene resin, and a mixture thereof. The polyolefin resin (A) preferably contains a polypropylene resin, more preferably contains both of a polypropylene resin and a polyethylene resin.

[Polypropylene resin]

Examples of the polypropylene resin include a propylene homopolymer and a copolymer of propylene and another olefin, though not particularly limited thereto. The polypropylene resins may be used singly or may be used in combination of two or more. Although the copolymer of propylene and another olefin may be any one of a block copolymer, a random copolymer, and a random block copolymer, a random copolymer is preferred.

Examples of the olefin to be copolymerized with propylene include an α-olefin such as ethylene, 1-butene, 1-pentene, 4-methyl-1-pentene, 1-hexene, 1-octene, 1-nonene and 1-decene. Among them, ethylene is preferred. In other words, an ethylene-propylene random copolymer is preferred as the polypropylene resin.

In the copolymer of propylene and another olefin, typically propylene is in an amount of 90 to 99.5 mass% and an α-olefin other than propylene is in an amount of 0.5 to 10 mass%, and preferably propylene is in an amount of 95 to 99 mass% and an α-olefin other than propylene is in an amount of 1 to 5 mass%

The polypropylene resin has a melt flow rate (hereinafter also referred to as "MFR") of, preferably 0.4 to 4.0 g/10 min, more preferably 0.5 to 2.5 g/10 min. Use of the polypropylene resin having an MFR in the range tends to provide favorable formability in processing the resin composition into a foam and favorable formability in secondary forming of the foam.

[Polyethylene resin]

Examples of the polyethylene resin include a low-density polyethylene resin, a medium-density polyethylene resin, a high-density polyethylene resin, and a linear low-density polyethylene resin, though not particularly limited thereto. Among them a linear low-density polyethylene resin (LLDPE) is preferred. The polyethylene resins may be used singly or may be used in combination of two or more.

The linear low-density polyethylene resin is a polyethylene having a density of 0.910 $g/cm^3$ or more and less than 0.950 $g/cm^3$, preferably 0.910 to 0.940 $g/cm^3$. The foam containing a linear low-density polyethylene resin having a low density tends to provide favorable workability in processing the resin composition into a foam and favorable formability in molding the foam to a molded product. The density of the resin is measured in accordance with JIS K7112.

The polyethylene resin has an MFR of preferably 0.4 to 4.0 g/10 min, more preferably 0.5 to 2.5 g/10 min. With use of the polyethylene resin having an MFR in the range, favorable formability in processing the resin composition to a foam and favorable formability in secondary forming of the foam tend to be obtained.

In the case of using a polyethylene resin in combination with a polypropylene resin, the content thereof is preferably 1 to 100 parts by mass, more preferably 1 to 50 parts by mass, still more preferably 3 to 30 parts by mass, relative to 100 parts by mass of the polypropylene resin. With a content in the range, favorable workability in processing the resin composition into a foam and favorable formability in molding a foam to a molded product tend to be obtained. The polyethylene resin for use in combination with a polypropylene resin is preferably a linear low-density polyethylene.

<Rubber (B)>

The rubber (B) for use in the present invention has a Mooney viscosity ($ML_{1+4}$, 100°C) of 15 to 85. The rubber (B) with a Mooney viscosity of less than 15 tends to wrinkle on the surface of a foam during the secondary forming. With a Mooney viscosity of more than 85, the flexibility of a foam decreases. In order to further improve the flexibility and the formability, the Mooney viscosity of the rubber (B) is preferably 25 to 75, more preferably 35 to 60.

The rubber (B) is contained in a resin composition in an amount of 10 to 150 parts by mass relative to 100 parts by mass of the olefin resin (A). With a content of the rubber (B) of less than 10 parts by mass, the flexibility of a foam decreases even if the crosslinking degree is adjusted as described below. With a content of more than 150 parts by mass, the mechanical strength of a foam is reduced and problems such as the occurrence of wrinkles during the secondary forming are easily caused. In view of improving the flexibility and the formability in a good balance, the content of the rubber (B) is preferably 30 to 130 parts by mass, more preferably 40 to 100 parts by mass, relative to 100 parts by mass of the olefin resin (A).

Rubber (B) is at least one selected from the group consisting of a styrene rubber and an olefin rubber as defined in the claims. In particular, an olefin rubber is preferred.

[Olefin rubber]

The olefin rubber is an amorphous or low-crystalline rubber material substantially randomly copolymerized from a plurality of olefin monomers, preferably an ethylene-$\alpha$-olefin copolymer rubber.

As the $\alpha$-olefin in the ethylene-$\alpha$-olefin copolymer rubber, one or more of olefins having about 3 to 10 carbon atoms such as propylene, 1-butene, 2-methylpropylene, 3-methyl-1-butene, and 1-hexene is used. In particular, propylene is preferred.

The olefin rubber may contain a repeating unit formed of a monomer other than olefin, and examples of the monomer include a diene compound typically exemplified by a non-conjugated diene compound having about 5 to 15 carbon atoms such as ethylidene norbornene, 1,4-hexadiene, and dicyclopentadiene.

Specific examples of the preferable olefin rubber include an ethylene-propylene copolymer rubber (EPM) and an ethylene-propylene-diene copolymer rubber (EPDM). In particular, an ethylene-propylene copolymer rubber (EPM) is more preferred.

In the present invention, use of the olefin rubber described above enhances the flexibility of a foam while maintaining the favorable formability, and enables the foam and a molded product to be smooth to the touch.

[Styrene rubber]

Any styrene rubber having a Mooney viscosity in the range described above may be used, and examples thereof include a rubber that is a copolymer of styrene with ethylene, propylene, butadiene, isoprene, or the like, and a hydrogenated product thereof.

More specifically, examples of the styrene rubber include a styrene-butadiene copolymer rubber (SBR), a hydrogenated styrene-butadiene copolymer rubber (HSBR), a styrene-butadiene-styrene block copolymer (SBS), a styrene-ethylene-styrene block copolymer (SES), a styrene-ethylene/butylene-styrene block copolymer (SEBS), and a styrene-ethylene/propylene-styrene block copolymer (SEPS). In particular, a styrene-butadiene copolymer rubber (SBR) is preferred.

The rubber (B) may be used singly or may be used in combination of two or more.

[Other resin component]

Resin and rubber components in the resin composition may consists of a resin component (A) and a rubber component (B), but may contain other optional rubber or resin components except for the components (A) and (B) as long as the object of the present invention is not impeded. Examples of the other rubber or resin components include an acrylic resin, EVA, and an acid modified polyolefin. The total content of the other rubber or resin components in a resin composition is typically 30 parts by mass or less, preferably 10 parts by mass or less, relative to 100 parts by mass of the polyolefin resin (A).

The term "resin component" used in the following description means the total of the polyolefin resin (A), the rubber (B), and the other rubber and resin components described above.

<Additive>

The resin composition typically contains a foaming agent as additive, and preferably contains one or both of a crosslinking aid and an antioxidant.

(Foaming agent)

A thermally decomposable foaming agent can be used as the foaming agent. For example, an organic or inorganic chemical foaming agent can be used, having a decomposition temperature of about 160°C to 270°C.

Examples of the organic foaming agent include: an azo compound such as azodicarbonamide, a metal azodicarboxylate (e.g. barium azodicarboxylate), and azobisisobutyronitrile; a nitroso compound such as N,N'-dinitrosopentamethylenetetramine; a hydrazine derivative such as hydrazodicarbonamide, 4,4'-oxybis(benzenesulfonyl hydrazide), and toluenesulfonyl hydrazide; and a semicarbazide compound such as toluenesulfonyl semicarbazide.

Examples of the inorganic foaming agent include an acid ammonium, sodium carbonate, ammonium hydrogen carbonate, sodium hydrogen carbonate, ammonium nitrite, sodium borohydride, and monosodium citrate anhydrate.

In particular, from the viewpoint of obtaining fine bubbles and the viewpoint of economic efficiency and safety, an azo compound and a nitroso compound are preferred; azodicarbonamide, azobisisobutyronitrile, and N,N'-dinitrosopentamethylenetetramine are more preferred; and azodicarbonamide is particularly preferred. These thermally decomposable foaming agents may be used singly or may be used in combination of two or more.

The content of a thermally decomposable foaming agent for appropriate foaming without rupture of the bubbles in a foam is preferably 1 to 30 parts by mass, more preferably 2 to 15 parts by mass, relative to 100 parts by mass of the resin components.

(Crosslinking aid)

A multi-functional monomer may be used as the crosslinking aid. A tri-functional (meth)acrylate compound such as trimethyrolpropane trimethacrylate and trimethyrolpropane triacrylate; a compound having three functional groups in a molecule such as trimellitic acid triallyl ester, 1,2,4-benzene tricarboxylic acid triallyl ester, and triallyl isocyanurate; a bi-functional (meth)acrylate compound such as 1,6-hexanediol dimethacrylate, 1,9-nonanediol dimethacrylate, 1,10-decanediol dimethacrylate, and neopentyl glycol dimethacrylate; a compound having two functional groups in a molecule such as divinylbenzene; diallylphthalate, diallylterephthalate, diallylisophthalate, ethylvinylbenzene, laurylmethacrylate and sterylmethacrylate are exemplified. The crosslinking aid may be used singly or may be used in combination of two or more. Among them, tri-functional (meth)acrylate compound is more preferred.

The addition of a crosslinking aid to a resin composition allows the resin composition to be crosslinked with a smaller dose of ionizing radiation. As a result, the individual resin molecule is prevented from being cut or deteriorated by the exposure to ionizing radiation.

The content of the crosslinking aid is preferably 0.2 to 20 parts by mass, more preferably 0.5 to 10 parts by mass, relative to 100 parts by mass of the resin components. With a content of 0.2 parts or more, the resin composition is easily controlled to a desired crosslinking degree during foaming. With a content of 20 parts by mass or less, the crosslinking degree to be imparted to a resin composition can be easily controlled.

(Antioxidant)

Examples of the antioxidant include a phenol antioxidant, a sulfur antioxidant, a phosphorus antioxidant, and an amine antioxidant. Among them a phenol antioxidant and a sulfur antioxidant are preferred, and use of a combination of a phenol antioxidant and a sulfur antioxidant is more preferred.

Examples of the phenol antioxidant include 2,6-di-tert-butyl-p-cresol, n-octadecyl-3-(3,5-di-tert-butyl-4-hydorxyphenyl)propionate, 2-tert-butyl-6-(3-tert-butyl-2-hydroxy-5-methylbenzyl)-4-methylphenylacrylate, tetrakis [methylene-3-(3,5-di-tert-butyl-4-hydroxyphenyl)propionate]methane. These phenol antioxidants may be used singly or may be used in combination of two or more.

Examples of the sulfur antioxidant include dilauryl thiodipropionate, dimyristyl thiodipropionate, distearyl thiodipropionate, pentaerythrityl tetrakis(3-lauryl thiopropionate). These sulfur antioxidants may be used singly or may be used in combination of two or more.

The content of the antioxidant is preferably 0.1 to 10 parts by mass, more preferably 0.2 to 5 parts by mass, relative to 100 parts by mass of resin components.

On an as needed basis, the resin composition may contain an additive other than the above-described ones such as an agent for adjusting decomposition temperature such as zinc oxide, zinc stearate and urea, a flame retardant, a metal toxicity inhibitor, an antistatic agent, a stabilizer, a filler, and a pigment.

[Crosslinked polyolefin foam]

The crosslinked polyolefin foam of the present invention (hereinafter also referred to simply as "foam") is made by crosslinking the resin composition described above and causing the composition to foam.

The foam of the present invention is crosslinked such that the foam has different crosslinking degrees depending on the position in the thickness direction. The foam has a higher crosslinking degree in at least any one of the surface layers at both surfaces of the foam than in the middle layer. With a higher crosslinking degree in the surface layer than in the middle layer, the surface layer has improved heat resistance to the molding heat during secondary forming and high mechanical strength. Consequently the surface of the foam hardly wrinkles during secondary forming. In addition, the middle layer has a high elongation at break, so that the foam as a whole can have both of favorable formability and flexibility.

The surface layer of the present invention is a portion with a depth of 500 $\mu$m from each of both surfaces of the foam, and the middle layer is a portion of the foam except for the surface layers. Both surfaces of the foam mean any one surface of the foam and another surface on the opposite side thereof. In the case of a foam in a sheet form, both surfaces of the foam mean the front and back surfaces.

In the present invention, the crosslinking degree in the surface layer is at least 5% higher than in the middle layer. In the case of a difference in the crosslinking degree between the surface layer and the middle layer of less than 5%, if the middle layer has sufficient flexibility, the heat resistance and mechanical strength of the surface layer are not sufficiently increased, resulting in easy occurrence of wrinkles on the surface of the foam during molding. On the other hand, if the foam is so crosslinked that the surface layer has sufficient heat resistance and mechanical strength, the middle layer has insufficient flexibility, resulting in a molded product having a rough feel to the touch. In other words, with a difference in the crosslinking degree of less than 5%, it is difficult to achieve both of the favorable formability and the flexibility in parallel.

In order to improve the formability and the flexibility in a good balance, the difference in the crosslinking degree between the surface layer and the middle layer is preferably 7% or more, more preferably 9% or more. The upper limit of the difference in the crosslinking degree is not particularly limited, but it is typically 20% or less.

In the present invention, the difference in the crosslinking degree between any one of both of the surface layers only and the middle layer may be in the range described above. Preferably, both of the differences in the crosslinking degree between the surface layers each and the middle layer are in the range described above.

The crosslinking degree of the entire foam is preferably 30 to 55%, more preferably 35 to 50%.

With a crosslinking degree of the entire foam in the range described above, the flexibility and the formability can be easily improved in a good balance. The method for measuring the above-mentioned crosslinking degree of the foam will be described in Examples later.

The foam of the present invention has a thickness of 1.5 mm or more. With a thickness of less than 1.5 mm, the part with a low crosslinking degree in the foam is reduced due to the insufficient thickness of the middle layer, so that the flexibility of the entire foam cannot be enhanced. The thickness of the foam is preferably about 1.5 to 8 mm, more preferably 1.7 to 5 mm. With a thickness of the foam in these ranges, both of the flexibility and the formability can be easily improved. In addition, the foam having a thickness in the ranges can be easily formed into various vehicle interior materials. The foam formed in a sheet form, i.e. a foam sheet, is preferred.

The foam of the present invention has a 25% compressive hardness of 60 kPa or less. In the present invention, with a compressive hardness of more than 60 kPa, the flexibility of the foam is reduced, and the molded product has a poor feel to the touch. From the viewpoint of further enhancing the flexibility, the 25% compressive hardness is preferably 55 kPa or less, more preferably 50 kPa or less. The lower limit of the 25% compressive hardness is not particularly limited but it is typically 25 kPa or more, preferably 30 kPa or more, from the viewpoint of securing the mechanical strength of the foam and the like.

In order to improve the flexibility and the strength in a good balance, the apparent density of the foam is preferably 0.03 to 0.20 g/cm$^3$, more preferably 0.04 to 0.15 g/cm$^3$, though not particularly limited.

<Manufacturing method of foam>

The foam of the present invention can be manufactured by, for example, melt-kneading the components to constitute a resin composition; forming the resultant into a desired shape; then irradiating the resin composition with ionizing radiation so as to crosslink the resin composition, and then causing the composition to foam by heating. The manufacturing method of the foam will be described in detail below.

In the present manufacturing method, firstly each of the components to constitute the resin composition is supplied to a kneader and they are melt-kneaded at a temperature lower than the decomposition temperature of the thermally decomposable foaming agent. Thereafter, the melt-kneaded resin composition is formed into a desired shape such as a sheet form preferably by the kneader that is used in the melt-kneading. Examples of the kneader for use include an extruder such as a mono-axial extruder and a bi-axial extruder, a Banbury mixer, and a general-purpose kneader such as rolls. Among them, an extruder is preferred.

The resin composition formed into a desired shape is then irradiated with various types of ionizing radiations in order to make a foam having different crosslinking degrees in the thickness direction as described above. Specific examples of the irradiation include a method involving irradiation of ionizing radiations having a different accelerating voltage each other in combination; a method involving irradiation of ionizing radiations while changing irradiation angle in combination; and a method involving irradiation of ionizing radiations having a different dose of irradiation each other in combination. These methods may be used in combination.

In particular, a method involving irradiation of a low-voltage ionizing radiation for crosslinking a portion mainly corresponding to the surface layer of a foam and a high-voltage ionizing radiation having a higher irradiation voltage than the former for crosslinking mainly the entire foam in combination is preferred.

The accelerating voltage of these ionizing radiations depends on the thickness of a foamable resin composition to be irradiated; however, for example, in the case of the thickness of 1.5 to 8 mm, it is preferred that the accelerating voltage of the low-voltage ionizing radiation is 50 to 500 kV, and the accelerating voltage of the high-ionizing radiation is preferably 600 to 1200 kV, and it is more preferred that the former is 100 to 400 kV and the latter is 600 to 1000 kV, in order to make a large difference in the crosslinking degree between the surface layer and the middle layer, and to allow the crosslinking to proceed properly.

In order to properly make the crosslinking without occurrence of a roughened surface, cracks, or the like, the dose of irradiation of the low-voltage ionizing radiation is preferably 1 to 30 Mrad, more preferably 2 to 25 Mrad. In order to properly crosslink the entire foam, the dose of irradiation of the high-voltage ionizing radiation is preferably 0.1 to 5 Mrad, more preferably 0.3 to 3 Mrad.

Examples of the ionizing radiation include electron beam, α ray, β ray, and γ ray, and X-ray. Among them, electron beam is preferred due to excellent productivity and achieving uniform irradiation. In the case of a resin composition formed into a sheet, for example, only one surface or both surfaces of the sheet may be irradiated with the ionizing radiation. Preferably, both surfaces are irradiated. For example, in the case that only one surface is irradiated with the low-voltage ionizing radiation, the difference in the crosslinking degree between only one surface layer and the middle layer reaches 5% or more, but the difference in crosslinking degree between another surface layer and the middle layer typically reaches less than 5%.

In the present manufacturing method, after crosslinking of a resin composition with an ionizing radiation as described above, the resin composition is heated for foaming at the decomposition temperature of the foaming agent or higher so as to obtain a foam. The heating temperature for foaming of a resin composition is typically 140 to 300°C, preferably 150 to 260°C, although it depends on the decomposition temperature of the thermally decomposable foaming agent for use as the foaming agent. Moreover, the foam may be stretched in one or both of the MD direction and the CD direction during or after foaming.

[Molded product]

In the present invention, the foam is molded to a molded product by a known method. Examples of the molding method include vacuum molding, compression molding and stamping. Among them, vacuum molding is preferred. The vacuum molding includes molding over a male mold and molding in a female mold, any one of which may be used.

The foam may be molded after stacking on another material. In that case, the molded product is formed from a laminate of the foam and the other material. Examples of the other material to be stacked on the foam include a sheet material such as a resin sheet, a thermoplastic elastomer sheet, and a fabric. In the case of a foam for use as vehicle interior materials, a polyvinyl chloride sheet, a resin sheet of mixed resin composed of polyvinyl chloride and an ABS resin, a thermoplastic elastomer sheet and various fabrics such as a textile, a knitted product, a nonwoven fabric, leather, artificial leather, and synthesized leather are preferably used as the sheet material.

The other material may be stacked on one or both surfaces of a foam. For example, in the case of a molded product for use as vehicle interior materials, the resin sheet, the thermoplastic elastomer sheet, or the fabric may be stacked on one surface of the foam and the resin sheet of polyethylene, polypropylene, or the like may be disposed on another surface.

The molded product obtained from the foam of the present invention is used as a thermal insulator, a cushion, and the like, and is preferably used in an automobile field as a vehicle interior material such as a ceiling material, a door, and an instrument panel.

Examples

The present invention will be further described in detail with reference to Examples below.

The method for measuring each of the physical properties and the method for evaluating a foam are as follows.

(1) Thickness of foam

A dial gauge was used for the measurement.

(2) Crosslinking degree

A test piece of about 100 mg was sampled, and the weight A (mg) of the test piece was accurately measured. Subsequently the test piece was immersed in 30 cm$^3$ of xylene at 120°C and left standing for 24 hours. The resulting xylene was then filtered with a 200-mesh metal screen, and insoluble components on the metal mesh were collected. The dry weight B (mg) of the insoluble components on the metal screen was accurately measured. The crosslinking degree was calculated based on the following formula.

$$\text{Crosslinking degree } (\%) = (\text{B/A}) \times 100$$

A portion sliced to a depth of 500 $\mu$m from each of both surfaces of a foam was defined as the surface layer and the remaining portion was defined as the middle layer. The test pieces of the surface layer and the middle layer were sampled from the surface layer and the middle layer evenly in the thickness direction, respectively. In the case of a middle layer having a thickness of 500 $\mu$m or more, the test piece was sampled from the 500-$\mu$m range at the center in the thickness direction of the middle layer.

The sampling for the measurement of the crosslinking degree of the entire foam was evenly performed along the entire thickness of a test piece.

(3) 25% Compressive hardness

The measurement was performed in accordance with JIS K6767.

(4) Apparent density

The apparent density of a foam was measured in accordance with JIS K7222.

(5) Mooney viscosity (ML$_{1+4}$, 100°C)

The Mooney viscosity (ML$_{1+4}$, 100°C) was measured in accordance with JIS K6300-1.

(6) MFR

The MFR value was measured under conditions with a temperature of 230°C and a load of 2.16 kgf for polypropylene resin, and with a temperature of 190°C and a load of 2.16 kgf for polyethylene resin, in accordance with JIS K7210.

(7) Formability

The foam obtained in each of Examples or Comparative Examples was molded to a box-shape molded product under conditions with a surface temperature of 140°C by a vacuum molding machine. On this occasion, a molded product without appearance of wrinkles was ranked as "A", and a molded product with appearance of wrinkles was ranked as "F".

Examples 1 to 6, and Comparative Examples 4 to 5

In each of Examples 1 to 6 and Comparative Examples 4 to 5, the resin components and the additives each shown in Table 1 in an amount shown in Table 1 were supplied to a mono-axial extruder, melt-kneaded at a resin temperature of 180°C, and extruded to obtain a resin composition in a sheet form with a thickness of 1.9 mm. Both surfaces of the resin composition in a sheet form was irradiated with electron beams twice separately, in a first irradiation and a second irradiation at the acceleration voltage with the irradiation dose shown in Table 1. These irradiations were performed from the both surface sides.
Subsequently foaming of the crosslinked resin composition was caused in an oven with a gas phase at 260°C, so that a foam sheet (foam) was obtained. The evaluation results of the foam in each of Examples and Comparative Examples are shown in Table 1.

Comparative Examples 1 to 3

In Comparative Examples 1 to 3, procedures were performed in the same manner as in Examples 1 to 3, except that the first irradiation of electron beam only was performed without separating irradiation in twice.

**EP 3 202 832 B1**

## Table 1

| | | | | Example | | | | | | Comparative Example | | | | |
|---|---|---|---|---|---|---|---|---|---|---|---|---|---|---|
| | | | | 1 | 2 | 3 | 4 | 5 | 6 | 1 | 2 | 3 | 4 | 5 |
| Resin composition | Resin component (part by mass) | Polyolefin resin (A) | PP | 50 | 50 | 50 | 30 | 50 | 50 | 50 | 50 | 50 | 80 | 30 |
| | | | LLDPE | 10 | 10 | 10 | 30 | 10 | 10 | 10 | 10 | 10 | 12 | 6 |
| | | Rubber (B) | EPM (Mooney viscosity: 55) | 40 | 40 | 40 | 40 | - | - | 40 | 40 | 40 | 8 | 64 |
| | | | EPDM (Mooney viscosity: 40) | - | - | - | - | 40 | - | - | - | - | - | - |
| | | | SBR (Mooney viscosity: 52) | - | - | - | - | - | 40 | - | - | - | - | - |
| | Additive (parts by mass) | | Foaming agent | 7 | 7 | 7 | 7 | 7 | 7 | 7 | 7 | 7 | 7 | 7 |
| | | | Crosslinking aid | 3 | 3 | 3 | 1.5 | 3 | 3 | 3 | 3 | 3 | 3 | 3 |
| | | | Antioxidant 1 | 0.3 | 0.3 | 0.3 | 0.3 | 0.3 | 0.3 | 0.3 | 0.3 | 0.3 | 0.3 | 0.3 |
| | | | Antioxidant 2 | 0.3 | 0.3 | 0.3 | 0.3 | 0.3 | 0.3 | 0.3 | 0.3 | 0.3 | 0.3 | 0.3 |
| | Parts by mass of rubber (B) (relative to 100 parts by mass of component (A)) | | | 67 | 67 | 67 | 67 | 67 | 67 | 67 | 67 | 67 | 9 | 178 |
| | Parts by mass of LLDPE (relative to 100 parts by mass of PP) | | | 20 | 20 | 20 | 100 | 20 | 20 | 20 | 20 | 20 | 15 | 20 |
| Extruded sheet | | Thickness (mm) | | 1.9 | 1.9 | 1.9 | 1.9 | 1.9 | 1.9 | 1.9 | 1.9 | 1.9 | 1.9 | 1.9 |
| Electron beam | First irradiation | Accelerating voltage (kV) | | 800 | 650 | 1000 | 800 | 800 | 800 | 800 | 650 | 1000 | 800 | 650 |
| | | Irradiation dose (Mrad) | | 1.5 | 1.5 | 1.5 | 2 | 1.5 | 1.5 | 1.5 | 1.5 | 1.5 | 1.5 | 1.5 |
| | Second irradiation | Accelerating voltage (kV) | | 120 | 120 | 120 | 120 | 120 | 120 | - | - | - | 120 | 120 |
| | | Irradiation dose (Mrad) | | 20 | 20 | 20 | 20 | 20 | 20 | - | - | - | 20 | 20 |
| Foam | Apparent density (g/cm³) | | | 0.053 | 0.051 | 0.049 | 0.052 | 0.051 | 0.054 | 0.05 | 0.048 | 0.052 | 0.051 | 0.053 |
| | Thickness (mm) | | | 2.98 | 2.96 | 3.02 | 3.01 | 3.03 | 3.04 | 3.03 | 2.95 | 2.97 | 3.03 | 3.01 |
| | Crosslinking degree | Surface layer (1) | | 52% | 51% | 54% | 40% | 48% | 52% | 41% | 38% | 40% | 51% | 41% |
| | | Middle layer | | 38% | 37% | 39% | 30% | 40% | 41% | 37% | 36% | 38% | 42% | 34% |
| | | Surface layer (2) | | 50% | 52% | 51% | 43% | 50% | 49% | 40% | 38% | 41% | 50% | 39% |
| | | Difference between surface layer (1) and middle layer | | 14% | 14% | 15% | 10% | 8% | 11% | 4% | 2% | 2% | 9% | 7% |
| | | Difference between surface layer (2) and middle layer | | 12% | 15% | 12% | 13% | 10% | 8% | 3% | 2% | 3% | 8% | 5% |
| | | Whole | | 40% | 39% | 41% | 33% | 42% | 44% | 38% | 37% | 39% | 44% | 36% |
| | Formability | Presence of wrinkle | | A | A | A | A | A | A | F | F | F | A | F |
| | Flexibility | 25% Compressive hardness (kPa) | | 45 | 48 | 44 | 43 | 42 | 44 | 42 | 45 | 46 | 82 | 37 |

The resin components and the additives each for use in each of Examples and Comparative Examples were as follows.

PP: ethylene-propylene random copolymer, product name: EG7F, manufactured by Japan Polypropylene Corporation, MFR = 1.3 g/10 min, ethylene content: 3 mass%

LLDPE: linear low-density polyethylene resin, product name: 2036P, manufactured by The Dow Chemical Company, Japan, MFR = 2.5 g/10 min, density = 0.935 g/cm³

EPM: ethylene-propylene copolymer rubber, product name: 301, manufactured by Sumitomo Chemical Co., Ltd., Mooney viscosity ($ML_{1+4}$, 100°C) = 55

EPDM: ethylene-propylene-diene copolymer rubber, product name: 3045, manufactured by Mitsui Chemicals, Inc., Mooney viscosity ($ML_{1+4}$, 100°C) = 40

SBR: styrene-butadiene copolymer rubber, product name: 1500, manufactured by JSR Corporation, Mooney viscosity ($ML_{1+4}$, 100°C) = 52

Foaming agent: azodicarbonamide

Crosslinking aid: trimethyrol propane trimethacrylate
Antioxidant 1: 2,6-di-tert-butyl-p-cresol
Antioxidant 2: dilauryl thiodipropionate

As described above, in Examples 1 to 6, a resin composition that contained a polyolefin resin (A), and a rubber (B) having a specified Mooney viscosity was irradiated with a plurality types of electron beams. As a result, the 25% compressive hardness was reduced to 60 kPa or less, and the crosslinking degree in the surface layer was sufficiently higher than in the middle layer. Consequently, the foams in these Examples had excellent flexibility and excellent formability in parallel, without occurrence of wrinkles during molding.

In contrast, in Comparative Examples 1 to 3, the resin composition was irradiated with a single type of electron beam, so that the crosslinking degree in the surface layer was not sufficiently higher than in the middle layer. Consequently, wrinkles occurred during molding and favorable formability were not obtained in Comparative Examples 1 to 3.

In Comparative Example 4, due to the too small amount of the rubber (B) added, the 25% compressive hardness increased, so that the flexibility of the foam was insufficient. In Comparative Example 5, due to the too large amount of the rubber (B) added, the foam had a reduced mechanical strength and wrinkled during molding.

## Claims

1. A crosslinked polyolefin foam that is a crosslinked foam of a polyolefin resin composition, the composition comprising: a polyolefin resin (A); and a rubber (B) having a Mooney viscosity ($ML_{1+4}$, 100°C) of 15 to 85, wherein the Mooney viscosity ($ML_{1+4}$, 100°C) is measured in accordance with JIS K6300-1, the rubber (B) being at least one selected from the group consisting of a styrene rubber and an olefin rubber and being contained in an amount of 10 to 150 parts by mass relative to 100 parts by mass of the polyolefin resin (A), the foam having a thickness of 1.5 mm or more, a 25% compressive hardness of 60 kPa or less, and a crosslinking degree of at least one of surface layers at both surfaces with a depth of 500 $\mu$m from the surface that is at least 5% higher than a crosslinking degree of a middle layer excluding the surface layers at both surfaces, wherein the 25% compressive hardness is measured in accordance with JIS K6767.

2. The crosslinked polyolefin foam according to claim 1, wherein the rubber (B) is an olefin rubber.

3. The crosslinked polyolefin foam according to claim 1 or 2, wherein the crosslinking degree of the whole is 30 to 55%.

4. The crosslinked polyolefin foam according to any one of claims 1 to 3, wherein the polyolefin resin (A) comprises a polypropylene resin.

5. The crosslinked polyolefin foam according to claim 4, wherein the polyolefin resin (A) further comprises 1 to 100 parts by mass of a polyethylene resin relative to 100 parts by mass of the polypropylene resin.

6. The crosslinked polyolefin foam according to claim 5, wherein the polyethylene resin is a linear low-density polyethylene resin.

7. The crosslinked polyolefin foam according to any one of claims 4 to 6, wherein the polypropylene resin is an ethylene-propylene random copolymer.

8. The crosslinked polyolefin foam according to any one of claims 1 to 7, wherein the crosslinking degree of each of the surface layers at both surfaces is at least 5% higher than the crosslinking degree of the middle layer.

9. A molded product obtained by molding the crosslinked polyolefin foam according to any one of claims 1 to 8.

## Patentansprüche

1. Vernetzter Polyolefinschaumstoff, welcher ein vernetzter Schaumstoff aus einer Polyolefinharzzusammensetzung ist, die Zusammensetzung umfassend: ein Polyolefinharz (A); und einen Kautschuk (B) mit einer Mooney-Viskosität ($ML_{1+4}$, 100°C) von 15 bis 85, wobei die Mooney-Viskosität ($ML_{1+4}$, 100°C) gemäß JIS K6300-1 gemessen wird, der Kautschuk (B) mindestens einer ist, gewählt aus der Gruppe, bestehend aus einem Styrolkautschuk und einem Olefinkautschuk, und in einer Menge von 10 bis 150 Masseteilen bezogen auf 100 Masseteile des Polyolefinharzes (A) enthalten ist,
der Schaumstoff eine Dicke von 1,5 mm oder mehr, eine 25%-Druckhärte von 60 kPa oder weniger, und einen Vernetzungsgrad von mindestens einer der Oberflächenschichten an beiden Oberflächen mit einer Tiefe von 500 µm von der Oberfläche aus aufweist, der mindestens 5% höher ist als ein Vernetzungsgrad einer Mittelschicht, ausgenommen der Oberflächenschichten auf beiden Oberflächen, wobei die 25%-Druckhärte gemäß JIS K6767 gemessen wird.

2. Vernetzter Polyolefinschaumstoff nach Anspruch 1, wobei der Kautschuk (B) ein Olefinkautschuk ist.

3. Vernetzter Polyolefinschaumstoff nach Anspruch 1 oder 2, wobei der Vernetzungsgrad insgesamt 30 bis 55% beträgt.

4. Vernetzter Polyolefinschaumstoff nach irgendeinem der Ansprüche 1 bis 3, wobei das Polyolefinharz (A) ein Polypropylenharz umfasst.

5. Vernetzter Polyolefinschaumstoff nach Anspruch 4, wobei das Polyolefinharz (A) weiterhin 1 bis 100 Masseteile eines Polyethylenharzes umfasst, bezogen auf 100 Masseteile des Polypropylenharzes.

6. Vernetzter Polyolefinschaumstoff nach Anspruch 5, wobei das Polyethylenharz ein lineares Polyethylenharz niedriger Dichte ist.

7. Vernetzter Polyolefinschaumstoff nach irgendeinem der Ansprüche 4 bis 6, wobei das Polypropylenharz ein Ethylen-Propylen-Randomcopolymer ist.

8. Vernetzter Polyolefinschaumstoff nach irgendeinem der Ansprüche 1 bis 7, wobei der Vernetzungsgrad jeder der Oberflächenschichten an beiden Oberflächen mindestens 5% höher ist als der Vernetzungsgrad der Mittelschicht.

9. Geformtes Produkt, erhalten durch Formen des vernetzten Polyolefinschaumstoffs nach irgendeinem der Ansprüche 1 bis 8.

**Revendications**

1. Mousse de polyoléfine réticulée qui est une mousse réticulée d'une composition de résine de polyoléfine, la composition comprenant :
une résine de polyoléfine (A) ; et
un caoutchouc (B) ayant une viscosité Mooney ($ML_{1+4}$, 100 °C) de 15 à 85, la viscosité Mooney ($ML_{1+4}$, 100 °C) étant mesurée conformément à JIS K6300-1, le caoutchouc (B) étant au moins un élément choisi dans le groupe consistant en un caoutchouc de styrène et un caoutchouc d'oléfine et étant contenu en une quantité de 10 à 150 parties en masse par rapport à 100 parties en masse de la résine de polyoléfine (A),
la mousse ayant une épaisseur de 1,5 mm ou plus, une résistance à la compression de 25 % de 60 kPa ou moins, et un degré de réticulation d'au moins une des couches de surface sur les deux surfaces avec une profondeur de 500 µm à partir de la surface qui est au moins 5 % supérieur à un degré de réticulation d'une couche médiane excluant les couches de surface sur les deux surfaces, la résistance à la compression de 25 % étant mesurée conformément à JIS K6767.

2. Mousse de polyoléfine réticulée selon la revendication 1, dans laquelle le caoutchouc (B) est un caoutchouc d'oléfine.

3. Mousse de polyoléfine réticulée selon la revendication 1 ou 2, dans laquelle le degré de réticulation de l'ensemble est de 30 à 55 %.

4. Mousse de polyoléfine réticulée selon l'une quelconque des revendications 1 à 3, dans laquelle la résine de polyoléfine (A) comprend une résine de polypropylène.

5. Mousse de polyoléfine réticulée selon la revendication 4, dans laquelle la résine de polyoléfine (A) comprend en outre 1 à 100 parties en masse d'une résine de polyéthylène par rapport à 100 parties en masse de la résine de polypropylène.

6. Mousse de polyoléfine réticulée selon la revendication 5, dans laquelle la résine de polyéthylène est une résine de polyéthylène à basse densité linéaire.

7. Mousse de polyoléfine réticulée selon l'une quelconque des revendications 4 à 6, dans laquelle la résine de polypropylène est un copolymère statistique éthylène-propylène.

8. Mousse de polyoléfine réticulée selon l'une quelconque des revendications 1 à 7, dans laquelle le degré de réticulation de chacune des couches de surface sur les deux surfaces est au moins 5% plus élevé que le degré de réticulation de la couche médiane.

9. Produit moulé obtenu par moulage de la mousse de polyoléfine réticulée selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008266589 A
- JP 2005350571 A
- JP 2004204154 A